# EUROPEAN PATENT SPECIFICATION

(11) **EP 2 298 665 B1**
(45) Date of publication and mention of the grant of the patent: **04.03.2015**
(21) Application number: 09758092.2
(22) Date of filing: 01.06.2009
(51) Int. Cl.: B65D 65/40, B32B 27/00, B32B 27/20, B65D 71/08, B32B 27/32

(54) **SHRINK FILM FOR LIGHT-SHIELDING PACKAGING**
SCHRUMPFFOLIE FÜR LICHTABSCHIRMENDE VERPACKUNG
PELLICULE RÉTRACTABLE POUR EMBALLAGE DOTÉ D UNE PROTECTION CONTRE LA LUMIÈRE

(30) Priority: 02.06.2008 JP 2008144201
(43) Date of publication of application: 23.03.2011
(73) Proprietor: Okura Industrial Co., Ltd., Marugame-shi Kagawa 763-8508 (JP); Kabushiki Kaisha Yakult Honsha, Minato-Ku Tokyo 105-0021 (JP); Toho Shoji Co., Ltd., Osaka 557-0045 (JP)
(72) Inventor: SAKAUCHI, Kunio, Marugame-Shi Kagawa 763-8508 (JP); HIRASE, Shohei, Marugame-Shi Kagawa 763-8508 (JP); HIRAOKA, Yuichi, Marugame-Shi Kagawa 763-8508 (JP); EBINA, Hideaki, Tokyo 105-0021 (JP); KIBE, Hiroyuki, Tokyo 105-0021 (JP); OTA, Hideki, Tokyo 105-0021 (JP); TOYOSHIMA, Kunimitsu, Osaka-Shi Osaka 557-0045 (JP)
(74) Representative: TBK
(86) International application number: PCT/JP2009/002441
(87) International publication number: WO 2009/147825

(56) References cited:
- EP-A1- 1 616 695
- WO-A1-2004/094139
- JP-A- 1 195 043
- JP-A- 60 257 236
- JP-A- 2003 200 965
- JP-A- 2003 305 811
- JP-A- 2005 219 396

## Description

### Technical Field

The present invention relates to light-shielding shrink films for packaging, particularly to light-shielding shrink films for packaging, comprising a light-shielding resin layer and a white resin layer provided to conceal the color of the light-shielding resin layer. Specifically, the invention provides a light-shielding shrink film for the individual or multiple-unit packaging of containers, capable of preventing deterioration or discoloration by light of the container contents such as food, drinks, and cosmetics, and that can be clearly printed or decorated thereon.

### Background Art

Shrink packaging using heat-shrinkable shrink films has been widely used for articles such as foods and sundries, because it allows for fast, tight, simultaneous packaging of multiple products regardless of the shape and size of the packaged articles. It also provides good appearance and display effects for the packaged products, increasing commodity values, and keeps good hygiene for the contents, in addition, it enables an easy quality check by visual inspection. For example, there has been proposed a polypropylenic laminated shrink film that has desirable stretchability and excellent thermal shrinkability with strong impact-resistance when used at a fuse-sealed portion (see Patent Document 1).

Recently, the qualities required for the shrink film packaging include not only the simple protection of the products from dust or dirt and improvement of commodity value, but the protection of the contents from ultraviolet light or visible light. For example, packaging using a shrink film having ingredients such as an ultraviolet light absorber is used to provide ultraviolet absorbing capability has been proposed (see Patent Document 2).

There have also been proposed a shrink film that uses a white or white opaque film to provide good contrast for the design made on the film, and that therefore has defined and clear contrast for the design while exhibiting sufficient light-shielding performance with the light-shield printed on the shrink film; and a light-shielding shrink film provided with a layer that includes a white ink layer and an aluminum paste-containing white ink layer successively printed over the whole surface by solid printing, and that therefore excels in light-shielding performance in the visible light and ultraviolet light ranges, and has superior white concealability (whiteness level) after the printing (see Patent Documents 3 and 4).

There has also been proposed a heat-shrinkable opaque-white film that includes a core layer of achromatic color, or of chromatic-color that suppresses the passage of the light of a 380 to 500 nm wavelength band, and white front and back layers which is used for a shrink label for a labeled container, and that can therefore suppress the light discoloration or deterioration of the container contents while clearly showing the printed design or the like and leaving a good impression of the container contents (see Patent Document 5). The publication also proposes a heat-shrinkable opaque-white film and a shrink label that are useful for the production of such labeled containers.

On the other hand, laminated films for light-shielding packaging are also available that include a light-shielding resin layer formed as a thermoplastic resin blended with a light-shielding pigment, and a white resin layer formed as a white colorant-containing resin composition, and that can therefore exhibit light-shielding performance while preventing the adverse effects of the light-shielding pigment. For example, there have been proposed laminated resin films of a transparent resin layer/white resin layer/light-shielding resin layer/white resin layer/transparent resin layered structure, in which a black pigment is used for the light-shielding resin layer (see Patent Document 6), a brown pigment is used for the light-shielding resin layer (see Patent Document 7), and an argent pigment is used for the light-shielding resin layer (see Patent Document 8).

### Prior Art Documents

### Patent Documents

Patent Document 1: JP-A-H01-195043
Patent Document 2: JP-A-H09-328164
Patent Document 3: JP-A-2003-26252
Patent Document 4: JP-A-2003-200966
Patent Document 5: International Publication WO2004/094139 (International Publication of EP 1616695 A1)
Patent Document 6: JP-A-2003-305811
Patent Document 7: JP-A-2004-114515
Patent Document 8: JP-A-2004-114523

### Disclosure of the Invention

### Problems that the Invention is to Solve

As described above, the light-shielding shrink films described in Patent Documents 3 and 4 involve solid printing of the light-shielding layer or solid printing of the light-shielding layer and the white layer over the whole surface after the production of the shrink film. This is problematic because it adversely affects the shrink characteristics when a thick print layer is formed, in addition to increasing the manufacturing steps.

While these problems are absent in the light-shielding shrink film described in Patent Document 5, the total film thickness is considerably thick because the film is intended for labeled containers. For example, as is clear from Examples, the thicknesses of the shrink film and the white surface-layer are as thick as 50 µm and 13 to 21 µm respectively, and it has not been easy to directly use the film as a packaging shrink film of 10 to 30µm in thickness.

The light-shielding laminated packaging films described in Patent Documents 6 to 8 are not intended for shrink packaging but for ordinary packaging. As such, each layer, including the light-shielding resin layer and the white resin layer, has a considerable thickness sufficient to block light such as sunlight and fluorescent light. For this reason, the white resin layer for these packaging films contains a 5 to 20 weight% of white pigment, and is as thick as 10 to 30 µm. The film thickness is about 50 to 100 µm, and the thickness is completely out of the range of the film for shrink packaging. Thus, it has not been easy to apply such a light-shielding laminated packaging film technique to the shrink film.

Under these circumstances, there have been some following problems to overcome in order to provide a light-shielding shrink film for packaging.

The packaging shrink film currently in use generally has a thickness of 10 to 30 µm, particularly preferably 10 to 20 µm. Given such a thin thickness, there is a limitation for the thickness of the concealing resin layer provided to conceal the color of the light-shielding resin layer for improved appearance. For this reason, it has been difficult to directly apply the non-shrink film techniques that use the 10 µm to 30 µm thickness range for the white resin layer itself.

It is known that the color of the underlying light-shielding resin layer can be concealed more effectively by increasing the thickness of the white resin layer. However, the problem remaining is not yet solved with regard to manufacture of a light-shielding shrink film that has sufficient light-shielding performance, and an opaque-white color for appearance and ease of design, and that has superior shrink characteristics, even with a thickness as thin as 10 to 30 µm.

It is an object of the present invention to solve such problems, and provide a high-performance light-shielding shrink film for packaging.

### Means for Solving the Problems

Under these circumstances, the present inventors have reached the present invention after intensive studies, conducted in the light of the foregoing conventional techniques to develop a light-shielding shrink film for packaging that has superior shrink characteristics, and an excellent appearance that enables decoration such as printing while having superior light-shielding performance at the same time.

The present invention solves the foregoing problems based on the following technical means.
(1) A light-shielding shrink film according to claim 1.
(2) The light-shielding shrink film for packaging of (1), wherein the transparent resin layer has a thickness of 1 µm or more.
(3) The light-shielding shrink film for packaging of any one of (1) to (2), wherein the light-shielding resin layer has a thickness of 2 to 8 µm.
(4) The light-shielding shrink film for packaging of any one of (1) to (3), wherein the white pigment is titanium dioxide.
(5) The light-shielding shrink film for packaging of any one of (1) to (4), wherein at least one of the surfaces of the shrink film has a JIS Z8729 luminance (L*) of 70 or more.
(6) A shrink package formed of the light-shielding shrink film for packaging of any one of (1) to (5).
(7) The shrink package of (6), wherein an article is packaged in such a manner that the concealing resin layer is on the outer side of the light-shielding resin layer.
(8) The shrink package of (6) or (7), wherein an outer surface of the shrink package has a JIS Z8729 luminance (L*) of 70 or more.

### Advantage of the Invention

The present invention is advantageous in the following respects.
(1) By the provision of the light-shielding resin layer and the concealing resin layer, the light-shielding shrink film for packaging excels not only in light-shielding performance but also in appearance.
(2) Because of the structure including the transparent resin layers as both outer layers, the light-shielding shrink film for packaging has a smooth surface and thus excels in printability.
(3) Because the thickness of the concealing resin layer and the content of the white pigment are specified, a light-shielding shrink film for packaging having superior light-shielding performance and appearance can easily be produced even with a thickness of 10 to 30 µm.
(4) Because the light-shielding shrink film for packaging has high surface luminance (L*), the film is clearly printable.
(5) The light-shielding shrink film for packaging excels in fuse-sealability.

### Best Mode for Carrying Out the Invention

The present invention is described below in detail.

A light-shielding shrink film for packaging of the present invention comprises a light-shielding resin layer, a concealing resin layer provided to conceal the color of the light-shielding resin layer, and transparent resin layers provided as both outer layers.

The light-shielding shrink film for packaging has a thickness of 10 to 30 µm, preferably 10 to 20 µm, most preferably 15 to 20 µm. With a thickness of less than 10 µm, sufficient thicknesses cannot be provided for the light-shielding resin layer and the concealing resin layer, and the light-shielding shrink film for packaging fails to have good light-shielding performance and appearance, or light-shielding performance. On the other hand, while light-shielding performance and good appearance can be obtained at the same time with a thickness of exceeding 30 µm, it leads to increased costs and is not usable, because the "shrink film" as used in the present invention is not intended for the direct packaging of contents but for the packaging of containers with their contents.

The rate of thermal shrinkage of a light-shielding shrink film for packaging of the present invention can be appropriately set according to the shape of the packaged article. However, the preferred rate of thermal shrinkage is 15% or more, preferably 20% or more, along the length direction (MD), and 20% or more, preferably 25% or more along the width direction (TD) as measured after being immersed in 110°C glycerin for 10 seconds.

The light-shielding resin layer forming the light-shielding shrink film for packaging of the present invention contains a light-shielding pigment. The thickness of the light-shielding resin layer and the pigment content can be appropriately selected within the ranges that satisfy the light-shielding performance. The preferred light-shielding performance is 3% or less light transmittance as measured in the wavelength range of 200 to 600 nm, with a spectrophotometer. However, considering practical deterioration of food and other contents by light, the preferred light-shielding performance should be 3% or less of light transmittance in the wavelength range of 340 to 550 nm, approximately the ultraviolet to visible light (green) range.

Inorganic pigments are mainly used for the light-shielding pigments for the light-shielding resin layer. For example, carbon black (average particle diameter of 0.03 µm, irregular particle) can be used for black, an iron oxide powder (average particle diameter of 0.17 µm, irregular particle) can be used for brown, and an aluminum powder (average particle diameter of 6 to 10 µm, scale-like) can be used for argent. In addition to these examples, the black may be appropriately selected from iron black and graphite, the brown from chrome yellow, molybdenum red, iron blue, ultramarine, red oxide, cadmium-based pigment, and cobalt-based pigment, and the argent from a metal powder of brass and copper. The light-shielding pigment has an average particle diameter of, for example, about 0.01 to 10 µm. An average particle diameter of less than 0.01 µm is not preferable because it tends to lower dispersibility. An average particle diameter of exceeding 10 µm is not preferable either, because it makes it difficult to obtain sufficient light-shielding performance. The pigment content in the light-shielding resin layer is preferably, for example, 2 to 10 wt% for the black pigment, 10 to 40 wt% for the brown pigment, and 10 to 40 wt% for the argent pigment. When the content falls below the lower limit, the advantages of the light-shielding layer become smaller. Above the upper limit, it becomes difficult to provide good film appearance, even though it increases the light-shielding performance. Further, the excess pigment content may lower the ability to melt and knead the resin in the film manufacturing steps, and cause discoloration. Another disadvantage is the weakened film strength, including, for example, tear strength, tensile strength, and puncture strength. It should be noted that the light-shielding resin layer may additionally contain a white pigment.

The light-shielding resin layer has a thickness of preferably 2 to 8 µm. A thickness of less than 2 µm is not preferable because it lowers light-shielding performance, and makes the light-shielding performance heavily dependent on thickness changes, even when the content of the light-shielding pigment satisfies the foregoing conditions. A thickness of exceeding 8 µm is not preferable either, because, despite improved light-shielding performance, it makes the thickness proportion of the light-shielding resin layer in the light-shielding shrink film for packaging too large, and makes it difficult to obtain a desirable light-shielding shrink film for packaging as a whole.

The concealing resin layer forming the light-shielding shrink film for packaging of the present invention is provided to completely conceal the color of the light-shielding resin layer, and thus to improve the appearance of the film viewed from the concealing resin layer side, and to enable clear prints to be made on the surface. In this manner, the concealing resin layer serves to conceal the light-shielding resin layer and improve the appearance and ease of design. The concealing resin layer additionally serves to reflect or diffuse the light in the ultraviolet light region, and inhibit or block the passage of the light in this wavelength range, thereby preventing light deterioration such as degradation, discoloration, and fading of the packaged contents.

The concealing resin layer has a thickness of preferably 2.4 to 8 µm, preferably 3 to 6 µm, further preferably 4 to 6 µm. A thickness of less than 2.4 µm is not preferable because it makes it difficult to conceal the color of the light-shielding resin layer even with an increased white pigment content, and thus makes the appearance of the filmpoor. The concealing resin layer thickness of exceeding 8 µm improves the color concealability for the light-shielding resin layer; however, it is not preferable because it takes away from the thin total thickness for the light-shielding shrink film for packaging, for example, the required thicknesses of the light-shielding resin layer to shield light and the transparent resin layer provided on both outer layers as transparent resin layers are not attained, in addition to the poor stretchability.

Inorganic pigments are used for the white pigments for the concealing resin layer. However, the type of inorganic pigment is not particularly limited, and, for example, titanium dioxide, zinc oxide (zinc white), zinc sulfide, barium sulfate, and white lead can be used. Among them, titanium dioxide is most preferable for its fine grain size and excellent properties such as luminance, concealability, color-imparting property, lightfastness, heat resistance, and chemical resistance.

The average particle diameter of the white pigment is, for example, 0.01 to 5 µm, more preferably about 0.1 to 1 µm. The white pigment exhibits high concealability within these ranges. The pigment content is 25 to 70 weight%, more preferably 30 to 60 weight%. Outside these preferable content ranges, specifically, when the content is less than 25 weight%, it becomes difficult to conceal the light-shielding resin layer, and the appearance or other cosmetic qualities of the film suffers in a concealing resin layer having a thickness of 2.4 to 8 µm. A content in excess of 70 weight% may significantly lower the ability to melt and knead the resin in film manufacture, causing discoloration. Another disadvantage is the weakened film strength, including, for example, tear strength, tensile strength, and puncture strength.

The most notable feature of the light-shielding shrink film for packaging of the present invention is that, even with a thin thickness of 10 to 30 µm, the shrink film can completely conceal the color of the light-shielding resin layer with the concealing resin layer, and can have a high-luminance opaque-white or white appearance (described later) and thus enables clear prints to be made, provided that the concealing resin layer has the specific composition and thickness presented above. Specifically, as is well known in the art, luminance improves as the thickness of the concealing resin layer and the content of the white pigment is increased, as is the case for the films used for the direct packaging of contents, or for the labels that are more decorative. While completely concealing the color of the light-shielding resin layer is not much of a problem in these applications that require less thickness restriction and thus allow the thickness of the concealing resin layer to be selected relatively more freely, it does pose a problem in other applications. The present invention solves such a problem in an extremely thin light-shielding shrink film for packaging having a thickness of 10 to 30 µm.

The effect of the concealing resin layer of the present invention can be evaluated by the luminance (L*) measurement specified by JIS Z8729 for light-shielding shrink films for packaging. In the present invention, it is preferable that the luminance (L*) is 70 or more in at least one of the surfaces. Generally, the surface appears opaque-white with a luminance of 70 or more, and the color of the light-shielding resin layer underlying the concealing resin layer does not appear on the surface, enabling clear prints to be made. There is no upper limit for luminance, because the whiteness only increases as the luminance increases. On the other hand, a luminance of less than 70 is not preferable, because the color of the underlying light-shielding resin layer is seen through the layer, and the surface no longer appears opaque-white, degrading the appearance and design of the light-shielding shrink film for packaging.

In the present invention, the luminance as measured from at least the concealing resin layer side can have a value of 70 or more when the concealing resin layer has the specific resin composition and thickness presented above. It should be noted that the concealing resin layer that satisfies the luminance for the black film used for the light-shielding resin layer (described alter) can sufficiently exhibit the shielding effect also for the brown or argent film used for the light-shielding resin layer.

The transparent resin layers, provided as the both outer layers of the light-shielding shrink film for packaging, have the effects to improve stretchability during the manufacture of shrink film, and to impart good weld-cut sealability. The transparent resin layer does not generate build-up around the die lip, or deposit the pigment adhesion to the rollers, provided that inorganic or other pigments are not added to the resin, or when the pigment is transparent and added only in small amounts that do not inhibit the foregoing effects. Further, because the transparent resin layer provides a smooth surface, the printed image appears even clearer, and cosmetically appealing print patterns can be reproduced or presented.

The thickness of the transparent resin layer is preferably 1 µm or more, more preferably 1.5 µm or more. With a transparent resin layer thickness of 1 µm or more, sufficient seal strength can be provided for, for example, a weld-cut and sealed package. Further, in a stretch step required for the manufacture of the light-shielding shrink film for packaging, the provision of the transparent resin layers as both outer layers advantageously widens the optimal stretch temperature and stretch rate ranges even with large amounts of pigments contained in the light-shielding resin layer and the concealing resin layer.

In the present invention, a white pigment-containing white resin layer is provided, in addition to the light-shielding resin layer, the concealing resin layer, and the transparent resin layer.

Unlike the concealing resin layer, the thickness of the white resin layer and the white pigment content therein are not particularly limited.

The resin used for the light-shielding shrink film for packaging of the present invention is olefinic resin. Examples of the olefinic resin include low-density polyethylene (LDPE); linear low-density polyethylene (LLDPE); medium-density polyethylene (MDPE); high-density polyethylene (HDPE) ; polyethylene resin containing copolymers of ethylene and a polymerizable double bond-containing monomer, such as an ethylene-acetic acid vinyl copolymer, an ethylene-(meth)acrylic acid copolymer, and an ethylene-(meth)acrylic acid ester copolymer; and polypropylene resin such as a propylene homopolymer, a propylene-ethylene random copolymer, a propylene-butene random copolymer, and a propylene-ethylene-butene ternary random copolymer. Among these olefinic resins, the polypropylene resin is preferable. The melt index (MI) of the polypropylene resin is preferably, for example, about 1 to 12 (g/10 min). The resin has stable moldability in this range of melt index. The resins may be used either alone or as a mixture of two or more. The same or different resins may be used for each layer of the light-shielding shrink film for packaging of the present invention.

The light-shielding resin layer, the concealing resin layer, and the transparent resin layer forming the light-shielding shrink film for packaging of the present invention may contain a lubricant, an antioxidant, an ultraviolet light absorber, a light stabilizer, a filler, an antistatic agent, a dispersant, a surfactant, a blocking preventing agent, and other plastic compounding agents and additives in accordance with intended usages, provided that the properties of each layer are not lost. Other components, such as modifying resin, may also be used.

The light-shielding shrink film for packaging of the present invention has a laminate structure comprising two transparent resin layers (outer layers) provided as the outermost layers of the film, and the concealing resin layer and the light-shielding resin layer provided as the inner layers. Specific examples of the layer structure comprise a transparent resin layer/concealing resin layer/light-shielding resin layer/concealing resin layer/transparent resin layer structure, and a transparent resin layer/concealing resin layer/light-shielding resin layer/white resin layer/transparent resin layer structure with a white pigment-containing white resin layer.

The resin in each layer of the light-shielding shrink film for packaging of the present invention may be such that, for example, polypropylene (hereinafter, "PP") or polyethylene resin (hereinafter, "PE") is used for all layers of the 5-layered structures such as , transparent resin layer/concealing resin layer/light-shielding resin layer/concealing resin layer/transparent resin layer, or transparent resin layer/concealing resin layer/light-shielding resin layer/white resin layer/transparent resin layer.
Alternatively, the layered structures may be selected from PP/PP-PE mixture (hereinafter simply "mixture")/mixture/mixture/PP, PP/mixture/PP/mixture/PP, PP/mixture/PE/mixture/PP, PE/mixture/mixture/mixture/PE, PE/mixture/PP/mixture/PE, or PE/mixture/PE/mixture/PE. Note that the bondability between the layers can be increased by using the mixture between polypropylene layer and polyethylene layer.

The light-shielding shrink film for packaging of the present invention can be produced using a coextrusion method. More specifically, the shrink film can be produced by the tenter stretch of a film obtained by using a tubular biaxial stretch method or a T-die method. Use of a tubular biaxial stretch method is particularly preferable. The preferred stretch temperature is the ambient temperature that makes the resin temperature 80 to 130°C. The draw rate is 3. 5 to 6 for the length direction (MD) and the width direction (TD).

For example, the 5-layered light-shielding shrink film for packaging can be produced using a tubular biaxial stretch method, as follows. Three extruders are prepared. A light-shielding pigment-containing resin composition, a 25 to 70 weight% of white pigment-containing resin composition, and a pigment-free synthetic resin are respectively supplied to these extruders, and the resins are extruded into a tube through the 5-layer extrusion annular die to obtain an original tube. After cooling, the resins are biaxially stretched to obtain a light-shielding shrink film for packaging of the present invention having a transparent resin layer/white layer/light-shielding resin layer/white layer/transparent resin layer structure. Here, when the both white layers have a thickness of 2.4 to 8 µm, the layer structure of the light-shielding shrink film for packaging becomes transparent resin layer/concealing resin layer/light-shielding resin layer/concealing resin layer/transparent resin layer. When one of the white layers has a thickness of 2.4 to 8 µm and the other with a thickness outside this range, the layer structure of the light-shielding shrink film for packaging becomes transparent resin layer/concealing resin layer/light-shielding resin layer/white resin layer/transparent resin layer.

In the present invention, because the thickness of the light-shielding shrink film for packaging is as thin as 10 to 30 µm, it is preferable that, when two resin layers of the same resin composition are provided, the thicknesses of the two resin layers be differentiated, instead of providing the same thickness for the two resin layers as commonly practiced. In this way, one of the resin layers can be provided as a concealing resin layer that excels in concealability, and the luminance (L*) measured on the concealing resin layer side can be increased at the expense of the luminance on the side of the other resin layer.

Exemplary use of the light-shielding shrink film for packaging of the present invention for packaging applications is the individual or multiple-unit packaging of, for example, containers. The container contents may be, for example, foods, drinks, or cosmetics. The shrink film is particularly suited for the packaging of products that give the buyers impressions with the color of the package film, and that easily undergo discoloration or degradation under light. Specific examples of food and drink include dairy products, lactic acid bacteria-containing drinks, alcoholic beverages, green tea, and vitamin-supplemented drinks.

In packaging an article with the light-shielding shrink film for packaging of the present invention, it is preferable that the article be packaged in such a manner that the concealing resin layer is on the outer side of the light-shielding resin layer. It is also preferable that the luminance (L*) of the outer surface of the shrink package be 70 or more as measured according to JIS Z8729.

### Examples

The following specifically describes the present invention based on Examples. The present invention, however, is in no way limited by the following Examples.

Rate of thermal shrinkage, luminance, and light-shielding performance were evaluated as follows.

### (1) Rate of Thermal Shrinkage

The rate of thermal shrinkage was measured after 10 seconds in 110°C glycerin according to ASTM D 2732.

### (2) Luminance

Luminance (L*) was measured using a spectrophotometer (CM-2500d, Konica Minolta), according to JIS K7105 (reflection method).

### (3) Light-Shielding Performance, (Light Transmittance)

For the measurement of light-shielding performance, light transmittance was measured in the measurement wavelength range of 200 nm to 600 nm using a spectrophotometer (U-3500, Hitachi High-Tech).

In the Examples, an ethylene-propylene random copolymer (melt flow rate = 2.5 g/10 min; ethylene content: 4.5% (hereinafter, "PP")) was used as the thermoplastic resin.

The following light-shielding pigments were used:
Black light-shielding pigment: carbon black (average particle diameter of 0.03 µm, irregular particle)
Brown light-shielding pigment: iron oxide powder (average particle diameter of 0.17 µm, irregular particle)
Argent light-shielding pigment: aluminum powder (average particle diameter of 6 to 10 µm, scale-like)
Titanium dioxide (average particle diameter: 0.2 µm; hereinafter, "TiO₂") was used as white pigment. Note that the white pigment content in the white pigment-containing resin layer was adjusted by appropriately using PP to dilute a polypropylene master batch whose white-pigment content in PP was 70 weight%.

### [Examples 1 to 4]

Using three extruders, a transparent resin layer, a concealing resin layer, a light-shielding resin layer, a white resin layer (of the same resin composition as the concealing resin layer), and a transparent resin layer were coextruded from the annular die at 220°C in order to prepare for the transparent resin layer/concealing resin layer/light-shielding resin layer/white resin layer/transparent resin layer. As a result, an original tube containing PP resin for all the layers was obtained with the layer thicknesses presented in Table 1. After cooling, the tube was stretched 5 times along the length and width directions at an ambient temperature of 157°C selected to make the resin temperature 80 to 130°C. After thermosetting, a light-shielding shrink film for packaging of the 5-layered structure of transparent resin layer/concealing resin layer/light-shielding resin layer/white resin layer/transparent resin layer presented in Table 1 was obtained. There was no generation of build-up around the die during the molding, and no problem was presented in the continuous production. Stretchability was also desirable. Table 1 also presents the rate of thermal shrinkage, luminance, and light-shielding performance of the film.

**[Table 1]**

| | | Ex. 1 | Ex. 2 | Ex. 3 | Ex. 4 |
|---|---|---|---|---|---|
| Original thickness (µm) | | 240 | 240 | 300 | 300 |
| Stretch rate (MD × TD) (times) | | 5×5 | 5×5 | 5×5 | 5×5 |
| Total thickness (µm) | | 15 | 15 | 20 | 20 |
| Transparent resin layer | Thickness (µm) | 3.0 | 2.5 | 4.0 | 4.0 |
| Concealing resin layer | TiO₂ content (weight%) | 42 | 35 | 42 | 42 |
| | Thickness (µm) | 4.8 | 5.5 | 5.0 | 5.0 |
| Light-shielding resin layer | Light-shield ing pigment | Carbon black | Carbon black | Iron oxide | Aluminum powder |
| | Content | 6.0 | 6.0 | 15.0 | 15.0 |
| | Thickness (µm) | 3.2 | 3.0 | 5.0 | 5.0 |
| White resin layer | TiO₂ content (weight%) | 42 | 35 | 42 | 42 |
| | Thickness (µm) | 1.0 | 1.5 | 2.0 | 2.0 |
| Transparent resin layer | Thickness (µm) | 3.0 | 2.5 | 4.0 | 4.0 |
| Stretchability | | Good | Good | Good | Good |
| Luminance (L*) | Concealing resin layer side | 80.45 | 79.02 | 81.18 | 83.1 |
| | White resin layer side | 50.61 | 51.51 | 59.17 | 72.28 |
| Rate of thermal shrinkage (MD/TD) (%) | | 31/37 | 27/32 | 22/34 | 28/35 |
| Light transmittance (%) | 400 nm | 0.1 | 0.2 | 0.1 | 0.3 |
| | 450 nm | 0.8 | 0.7 | 0.5 | 1.3 |
| | 550 nm | 1.5 | 1.4 | 1.3 | 1.6 |

| | | | | | |
|---|---|---|---|---|---|
| *1) Thickness of each layer is a preset value :2) Light transmittance is the transmittance at a representative wavelength. The maximum value did not exceed this value. | | | | | |

As can be clearly seen in Table 1, the light-shielding shrink films for packaging of the present invention according to Examples 1 to 4 had luminances of 70 or more on the concealing resin layer-side surface, and were substantially opaque-white such that the colors, including black, brown, and argent, of the light-shielding resin layer were almost unnoticeable. The films also had good printability. Further, the shrink films had sufficient rates of thermal shrinkage, and excelled in heat-shrinkability and light-shielding performance. On the other hand, the luminance was only about 50 on the white resin layer side in Examples 1 to 3 in which carbon black and iron oxide were used for the light-shielding pigments, because the white resin layer, despite the same TiO₂ content as that of the concealing resin layer, had a thickness of less than 2.4 µm. Accordingly, the appearance was poor, and clear printing was difficult. Luminance was high on both sides when the aluminum powder was used for the light-shielding pigment.

The light-shielding shrink films for packaging of the present invention according to Examples 1 to 4 were used to wrap beverage plastic bottles in such a manner that the concealing resin layer was on the outer side of the light-shielding resin layer. The weld-cut sealability was desirable in all samples, and the shrink packages had almost an opaque-white appearance.

### [Example 5]

As in Example 1, a light-shielding shrink film for packaging of the 5-layered structure of transparent resin layer/concealing resin layer/light-shielding resin layer/white resin layer (of the same resin composition as the concealing resin layer)/transparent resin layer presented in Table 2 was obtained.

As can be clearly seen in Table 2, the light-shielding shrink film for packaging of the present invention according to Example 5 had a luminance of 70 or more and was substantially opaque-white on the concealing resin layer-side surface such that the black color of the light-shielding resin layer was almost unnoticeable. The shrink film also had good printability. Further, the film had a sufficient rate of thermal shrinkage, and excelled in heat-shrinkability and light-shielding performance. On the other hand, the luminance on the white resin layer side was less than 60, because carbon black was used for the light-shielding pigment, and because the white resin layer, despite the same TiO₂ content as that of the concealing resin layer, had a thickness of less than 2.4 µm. Accordingly, the appearance was poor, and clear printing was difficult. The light-shielding shrink film for packaging of the present invention according to Example 5 was used to wrap beverage plastic bottles in such a manner that the concealing resin layer was on the outer side of the light-shielding resin layer. The weld-cut sealability was desirable in all samples, and the shrink packages had almost an opaque-white appearance.

**[Table 2]**

| | | Ex. 5 | Ex. 6 |
|---|---|---|---|
| Original thickness (µm) | | 300 | 300 |
| Stretch rate (MD × TD) (times) | | 5×5 | 5x5 |
| Total thickness (µm) | | 20 | 20 |
| Transparent resin layer | Thickness (µm) | 3.4 | 3.4 |
| Concealing resin layer | TiO₂ content (weight%) | 35 | 35 |
| | Thickness (µm) | 7.1 | 6.6 |
| Light-shielding resin layer | Light-shielding pigment | Carbon black | Carbon black |
| | Content | 7 | 7 |
| | Thickness (µm) | 4 | 4 |
| White resin layer | TiO₂ content (weight%) | 35 | 35 |
| | Thickness (µm) | 2.1 | 2.6 |
| Transparent resin layer | Thickness (µm) | 3.4 | 3.4 |
| Stretchability | | Good | Good |
| Luminance (L*) | Concealing resin layer side | 81.1 | 81.1 |
| | White resin layer side | 58.2 | 65.6 |
| Rate of thermal shrinkage (MD/TD) (%) | | 24/33 | 23/32 |
| Light transmittance (%) | 400 nm | 0.1 | 0.1 |
| | 450 nm | 0.4 | 0.2 |
| | 550 nm | 0.8 | 0.5 |

### [Example 6]

As in Example 1, a light-shielding shrink film for packaging of the 5-layered structure of transparent resin layer/concealing resin layer/light-shielding resin layer/white resin layer (of the same resin composition as the concealing resin layer) /transparent resin layer presented in Table 2 was obtained.

As can be clearly seen in Table 2, the light-shielding shrink film for packaging of the present invention according to Example 6 had a luminance of 70 or more, and was substantially opaque-white on the concealing resin layer-side surface such that the black color of the light-shielding resin layer was almost unnoticeable. The shrink film also had good printability. Further, the film had a sufficient rate of thermal shrinkage, and excelled in heat-shrinkability and light-shielding performance. On the other hand, the luminance was less than 70 on the concealing resin layer side, because carbon black was used for the light-shielding pigment, despite that the concealing resin layer had the same TiO₂ content as the concealing resin layer. Accordingly, the appearance was poor, and clear printing involved some difficulty. The light-shielding shrink film for packaging of the present invention according to Example 6 was used to wrap beverage plastic bottles in such a manner that the concealing resin layer was on the outer side of the light-shielding resin layer. The weld-cut sealability was desirable in all samples, and the shrink packages had almost an opaque-white appearance.

Table 2 also presents the rate of thermal shrinkage, luminance, and light-shielding performance.

### [Example 7](Reference Example)

A light-shielding shrink film for packaging with a thickness of 14 µm (layer thicknesses (preset values) : 3.0 µm for transparent resin layer/4.8 µm for concealing resin layer/3.2 µm for light-shielding resin layer/3.0 µm for transparent resin layer) was obtained as in Example 1, except that the film had the 4-layered structure of transparent resin layer/concealing resin layer/light-shielding resin layer/transparent resin layer. There was no deposition of build-up around die during the molding of the light-shielding shrink film for packaging, and no problem was presented in the continuous production. Stretchability was also desirable. Further, the film had a rate of thermal shrinkage of 30% along the MD direction and 35% along the TD direction, and a luminance of 80.45 on the concealing resin layer side as in Example 1. The light-shielding performance was about the same as that in Example 1. The light-shielding shrink film for packaging of the present invention was used to wrap beverage plastic bottles in such a manner that the concealing resin layer was on the outer side of the light-shielding resin layer. The weld-cut sealability was desirable in all samples, and the shrink packages had almost an opaque-white appearance.

### [Reference Example 1]

The relationship between the thickness of the concealing resin layer and luminance was elucidated by measuring the luminance of the film provided with the concealing resin layer of various thicknesses (Table 3) formed on the light-shielding resin layer of Table 3. The results are shown in Table 3. Note that a resin composition containing 42 weight% of TiO₂ in the PP resin was used as the concealing resin layer.

**[Table 3]**

| | Light-shielding resin layer | | Thickness of concealing resin layer (µm) | Luminance (L*) |
|---|---|---|---|---|
| Experiment No. | Light-shielding pigment | Concentration (wt%) | | |
| 1 | Carbon black | 6 | 3.6 | 75.28 |
| 2 | Carbon black | 6 | 2.3 | 66.86 |
| 3 | Iron oxide | 15 | 3.5 | 76.25 |
| 4 | Iron oxide | 15 | 2.4 | 70.44 |
| 5 | Aluminum | 15 | 3.2 | 79.10 |
| 6 | Aluminum | 15 | 2.4 | 75.22 |

As is clear from Table 3, while the concealing resin layers with the experiment numbers 1, and 3 to 6 had luminances of 70 and higher, sufficient concealing performance was not obtained with a thickness less than 2.4 µm.

### [Reference Example 2]

The relationship between the white pigment titanium dioxide content in the white resin layer and luminance was elucidated by measuring the luminance of films provided with a 5 µm-thick concealing resin layer of 14 to 56 weight% of TiO₂ contents (Table 4) formed on the top surface of the light-shielding resin layer that contained 6 wt% carbon black. The results are shown in Table 4.

**[Table 4]**

| | Concealing resin layer | | Luminance (L*) |
|---|---|---|---|
| Experiment No. | TiO₂ content (wt%) | Thickness (µm) | |
| 7 | 14 | 5.0 | 62.16 |
| 8 | 21 | 5.0 | 69.82 |
| 9 | 28 | 5.0 | 70.16 |
| 10 | 56 | 5.0 | 88.47 |

As is clear from Table 4, a luminance of 70 or more was obtained with the 5.0µm thickness when the white pigment (titanium dioxide) content was 25 weight% or more. Specifically, it can be seen that sufficient concealability cannot be obtained with a thickness of about 5.0 µm when the titanium dioxide content is 10 to 20 weight% as in conventional techniques.

### Industrial Applicability

The present invention concerns a light-shielding shrink film for packaging. A light-shielding shrink film for packaging of the invention comprises a light-shielding resin layer, a concealing resin layer provided to conceal the color of the light-shielding resin layer, and a transparent resin layer provided as both outer layers. The light-shielding shrink film for packaging has a thickness of 10 to 30 µm. The concealing resin layer is a resin composition that contains a 25 to 70 weight% of white pigment, and has a thickness of 2.4 to 8.0 µm. The light-shielding shrink film for packaging provided by the present invention excels in light-shielding performance, printability, and appearance, and has an opaque-white appearance even with an extremely thin thickness. The shrink film is therefore useful as novel packaging material suited for individual or multiple-unit packaging of products such as beverage containers.

## Claims

1. A light-shielding shrink film for packaging, comprising a light-shielding resin layer, a concealing resin layer provided to conceal the color of the light-shielding resin layer, and transparent resin layers provided as both outer layers,
**characterized in that** the resin in the layers of the light-shielding shrink film for packaging is olefinic resin, the light-shielding shrink film for packaging has a thickness of 10 to 30 µm, and that the concealing resin layer is a resin composition containing a 25 to 70 weight% of white pigment and has a thickness of 2.4 to 8.0 µm,
wherein the shrink film comprises a white pigment-containing white resin layer, and is a laminate in order of transparent resin layer/concealing resin layer/light-shielding resin layer/white resin layer/transparent resin layer.

2. The light-shielding shrink film for packaging of claim 1, wherein the white pigment-containing white resin layer is a resin composition containing a 25 to 70 weight% of white pigment and has a thickness of 2.4 to 8.0 µm, and the shrink film is a laminate in order of transparent resin layer/concealing resin layer/light-shielding resin layer/concealing resin layer/transparent resin layer.

3. The light-shielding shrink film for packaging of claim 1 or 2, wherein the transparent resin layer has a thickness of 1 µm or more.

4. The light-shielding shrink film for packaging of any one of claims 1 to 3, wherein the light-shielding resin layer has a thickness of 2 to 8 µm.

5. The light-shielding shrink film for packaging of any one of claims 1 to 4, wherein the white pigment is titanium dioxide.

6. The light-shielding shrink film for packaging of any one of claims 1 to 5, wherein at least one of the surfaces of the shrink film has a JIS Z8729 luminance (L*) of 70 or more.

7. A shrink package packaging, the shrink package being formed of the light-shielding shrink film for packaging of any one of claims 1 to 6.

8. The shrink package of claim 7, wherein an article is packaged in such a manner that the concealing resin layer is on the outer side of the light-shielding resin layer.

9. The shrink package of claim 7 or 8, wherein an outer surface of the shrink package has a JIS Z8729 luminance (L*) of 70 or more.

## Patentansprüche

1. Lichtabschirmender Schrumpffilm zum Verpacken, umfassend eine Lichtabschirmharzschicht, eine kaschierende Harzschicht, die vorgesehen ist, um die Farbe der lichtabschirmenden Harzschicht zu kaschieren, und transparente Harzschichten, die als beide äußere Schichten vorgesehen sind,
**dadurch gekennzeichnet, dass** das Harz in den Schichten des lichtabschirmenden Schrumpffilms zum Verpacken ein olefinisches Harz ist, der lichtabschirmende Schrumpffilm zum Verpacken eine Dicke von 10 bis 30 µm aufweist, und dass die kaschierende Harzschicht eine Harzzusammensetzung ist, die 25 bis 70 Gew.-% an Weißpigment enthält und eine Dicke von 2,4 bis 8,0 µm aufweist,
wobei der Schrumpffilm eine Weißpigment-enthaltende weiße Harzschicht umfasst, und ein Laminat in der Reihenfolge transparente Harzschicht/kaschierende Harzschicht/lichtabschirmende Harzschicht/weiße Harzschicht/transparente Harzschicht ist.

2. Lichtabschirmender Schrumpffilm zum Verpacken nach Anspruch 1, wobei die Weißpigment-enthaltende weiße Harzschicht eine Harzzusammensetzung ist, die 25 bis 70 Gew.-% Weißpigment enthält und eine Dicke von 2,4 bis 8,0 µm aufweist, und der Schrumpffilm ein Laminat in der Reihenfolge transparente Harzschicht/ kaschierende Harzschicht/lichtabschirmende Harzschicht/kaschierende Harzschicht/transparente Harzschicht ist.

3. Lichtabschirmender Schrumpffilm zum Verpacken nach Anspruch 1 oder 2, wobei die transparente Harzschicht eine Dicke von 1 µm oder mehr aufweist.

4. Lichtabschirmender Schrumpffilm zum Verpacken nach einem der Ansprüche 1 bis 3, wobei die lichtabschirmende Harzschicht eine Dicke von 2 bis 8 µm aufweist.

5. Lichtabschirmender Schrumpffilm zum Verpacken nach einem der Ansprüche 1 bis 4, wobei das Weißpigment Titandioxid ist.

6. Lichtabschirmender Schrumpffilm zum Verpacken nach einem der Ansprüche 1 bis 5, wobei zumindest eine der Oberflächen des Schrumpffilms eine Luminanz (L*) nach JIS Z8729 von 70 oder mehr aufweist.

7. Schrumpfpackverpackung, wobei die Schrumpfverpackung aus dem lichtabschirmenden Schrumpffilm zum Verpacken nach einem der Ansprüche 1 bis 6 gebildet ist.

8. Schrumpfverpackung nach Anspruch 7, wobei ein Artikel in solch einer Weise verpackt wird, dass die kaschierende Harzschicht auf der Außenseite der lichtabschirmenden Harzschicht liegt.

9. Schrumpfverpackung nach Anspruch 7 oder 8, wobei eine äußere Oberfläche der Schrumpfverpackung eine Luminanz (L*) nach JIS Z8729 von 70 oder mehr aufweist.

## Revendications

1. Film rétractable à protection contre la lumière pour emballage, comprenant une couche de résine à protection contre la lumière, une couche de résine de masquage prévue pour masquer la couleur de la couche de résine à protection contre la lumière, et des couches de résine transparentes prévues en tant que deux couches extérieures,
**caractérisé en ce que** la résine dans les couches du film rétractable à protection contre la lumière pour emballage est une résine oléfinique, le film rétractable à protection contre la lumière pour emballage a une épaisseur de 10 à 30 µm, et **en ce que** la couche de résine de masquage est une composition de résine contenant 25 à 70 % en poids d'un pigment blanc et a une épaisseur de 2,4 à 8,0 µm,
dans lequel le film rétractable comprend une couche de résine blanche contenant un pigment blanc, et est un stratifié dans l'ordre d'une couche de résine transparente / couche de résine de masquage /couche de résine à protection contre la lumière /couche de résine blanche / couche de résine transparente.

2. Film rétractable à protection contre la lumière pour emballage selon la revendication 1, dans lequel la couche de résine blanche contenant un pigment blanc est une composition de résine contenant 25 à 70 % en poids d'un pigment blanc et a une épaisseur de 2,4 à 8,0 µm, et le film rétractable est un stratifié dans l'ordre d'une couche de résine transparente / couche de résine de masquage / couche de résine à protection contre la lumière / couche de résine de masquage / couche de résine transparente.

3. Film rétractable à protection contre la lumière pour emballage selon la revendication 1 ou 2, dans lequel la couche de résine transparente a une épaisseur de 1 µm ou plus.

4. Film rétractable à protection contre la lumière pour emballage selon l'une quelconque des revendications 1 à 3, dans lequel la couche de résine à protection contre la lumière a une épaisseur de 2 à 8 µm.

5. Film rétractable à protection contre la lumière pour emballage selon l'une quelconque des revendications 1 à 4, dans lequel le pigment blanc est du dioxyde de titane.

6. Film rétractable à protection contre la lumière pour emballage selon l'une quelconque des revendications 1 à 5, dans lequel au moins une des surfaces du film rétractable a une luminance (L*) JIS Z8729 de 70 ou plus.

7. Emballage rétractable, l'emballage rétractable étant formé du film rétractable à protection contre la lumière pour emballage selon l'une quelconque des revendications 1 à 6.

8. Emballage rétractable selon la revendication 7, dans lequel un article est emballé de telle sorte que la couche de résine de masquage est sur le côté extérieur de la couche de résine à protection contre la lumière.

9. Emballage rétractable selon la revendication 7 ou 8, dans lequel une surface extérieure de l'emballage rétractable a une luminance (L*) JIS Z8729 de 70 ou plus.
